# EUROPÄISCHE PATENTSCHRIFT

(11) **EP 1 362 806 B1**
(45) Veröffentlichungstag und Bekanntmachung des Hinweises auf die Patenterteilung: **01.12.2004**
(21) Anmeldenummer: 03008963.5
(22) Anmeldetag: 17.04.2003
(51) Int. Cl.: B65G 19/28

(54) **Rinnenschuss für einen Kettenkratzförderer**
Scraper conveyor trough section
Couloir pour un convoyeur à raclettes

(30) Priorität: 17.05.2002 DE 10222597
(43) Veröffentlichungstag der Anmeldung: 19.11.2003
(73) Patentinhaber: DBT GmbH, 44534 Lünen (DE)
(72) Erfinder: Vorsteher, Dirk, Dr., 33619 Bielefeld (DE); Merten, Gerhard, 44534 Lünen (DE); Fischer, Frank, 44534 Lünen (DE); Wirtz, Jörg, 45529 Hattingen (DE); Schmidt, Siegfried, 46242 Bottrop (DE); Broszat, Martin, 59349 Nordkirchen (DE); Hefferan, Alfred, Venetia, PA 15367-1055 (US); Cobley, John, Farnsfield, Nottinghamshire NG228EZ (GB); McAndrew, Alister, Belper, Derby DE56IJE (GB); Losbrodt, Olaf, 44623 Herne (DE)
(74) Vertreter: Althaus, Arndt, Dipl.-Ing.

(56) Entgegenhaltungen:
- DE-A- 4 005 249
- DE-B- 1 258 333
- DE-C- 935 302
- GB-A- 681 954
- US-A- 4 624 362

## Beschreibung

Die Erfindung betrifft einen Rinnenschuß für einen untertägigen Streb- oder Streckenförderer, mit Obertrum und Untertrum zur Führung der Kratzer einer Kratzerkette, mit einem diese trennenden Förderboden, mit Rinnenschußverbindungsmitteln und mit zwei Seitenwangen, die jede ein gewalztes, einen Zwischenschenkel und zwei Flanschschenkel aufweisendes U-Eisenprofil umfaßt und die durch wenigstens ein in etwa auf halber Höhe angeordnetes und am vertikal aufragenden Zwischenschenkel der U-Eisenprofile angeschweißtes Blech miteinander verbunden sind.

In untertägigen Gewinnungsanlagen wie z.B. untertägigen Bergbaubetrieben kommen Kettenkratzförderer großer Gesamtlängen zum Einsatz, die aus einzelnen endseitig zugfest miteinander verbundenen Rinnenschüssen zusammengesetzt sind. Die Verbindung der benachbarten und aneinander angeschlossenen Rinnenschüsse erfolgt z.B. über Knebeltaschen und Knebel, die eine gewisse Winkelbeweglichkeit in der Horizontalen und der Vertikalen der benachbarten Rinnenschüsse zulassen, so daß der Kettenkratzförderer Bodenunebenheiten im Liegenden ausgleichen kann und mit dem Fortschritt der Abbaufront mitbewegt werden kann. Sofern die Rinnenschüsse für Strebförderer eingesetzt werden, sind sie versatzseitig und/oder abbaustoßseitig mit Anbauteilen zur Führung z.B. eines Gewinnungshobels oder eines Walzenladers versehen und weisen Anschlußkonsolen für einen am Strebausbau widergelagerten Schreitbalken auf. Durch Verbesserungen der Gewinnungsleistung der Gewinnungsmaschinen und durch Steigerung der Streblängen auf mittlerweile bis zu 450m steigt die von den Förderern zu bewältigende Förderleistung ebenfalls an und moderne Streb- und Streckenförderer müssen Förderkapazitäten von wenigstens 2000 t/h (Tonnen/Stunde), bei Hochleistungsförderern auch von 5000 t/h bewältigen können. Mit steigender Förderkapazität nimmt der Verschleiß einzelner Rinnenschüsse zwangsläufig zu und es besteht im Markt ein Bedarf an Förderrinnen mit hoher Förderkapazität und langer Lebensdauer bei möglichst niedrigen Produktionskosten und niedrigem Gesamtgewicht der einzelnen Rinnenschüsse.

Moderne untertägige Streb- und Streckenförderer können anhand des Aufbaus der Rinnenschüsse in drei Gruppen eingeteilt werden. Die erste Gruppe beinhaltet Förderer mit vollständig gegossenen Rinnenschüssen. Der Vorteil derartiger Gußkonstruktionen liegt in ihrer hohen Reproduzierbarkeit, der hohen Belastbarkeit aufgrund des homogenen Aufbaus und der geringen Anfälligkeit gegenüber Montagefehlern. Nachteilig sind die hohen Materialkosten, die geringe Eignung, einzelne Zonen für höhere Belastungen oder längere Lebensdauer auszulegen sowie die fehlende Möglichkeit, Verschleißteile auszutauschen.

Die zweite Gruppe bilden sogenannte Hybridrinnen, die einerseits aus Gußteilen und andererseits aus Walzteilen bestehen. Eine derartige Hybridrinne zeigt beispielsweise die EP 525 926 B1. Hybridrinnen kommen mit einer geringen Anzahl von Schweißnähten aus, da z.B. die gesamte Konstruktion der Seitenwange einschließlich Seitenprofil zur Führung der Kratzer in den Trumen und Knebeltasche als Teil der Rinnenschußverbindungsmittel einstückig ausgebildet werden kann, während der Förderboden als eines der hauptbelasteten Teile an den gegossenen Seitenwangen angeschweißt wird. Ferner ist bei Hybridrinnen bekannt, die Rinnenschußverbindungsmittel und andere Anbauteile zum Rücken des Förderers oder zur Führung einer Gewinnungsmaschine nachträglich anzuschweißen (DE 39 05 324 A1).

Die dritte Gruppe von Rinnenschüssen besteht vollständig oder annähernd vollständig aus einer Schweißkonstruktion, wobei zumindest die höher belasteten Bauteile wie Förderboden und/oder Seitenprofile aus Walzprofilen bestehen und hierdurch eine deutlich längere Lebensdauer und geringere Verschleißanfälligkeit aufweisen (z.B. DE 29 18 007 A1, DE 39 33 884 C2 oder DE 40 06 183 C2). Der wesentliche Vorteil der geschweißten Rinnenschüsse liegt darin, daß durch die Auswahl unterschiedlicher Materialien und Herstellverfahren für die einzelnen Teile der Schweißkonstruktion die Lebensdauer des Rinnenschusses insgesamt verlängert werden kann. Ihr wesentlicher Nachteil liegt in den wegen der Vielzahl von vorzunehmenden Montageschritten und Schweißverbindungen langen Fertigungszeiten sowie den hohen, personalabhängigen Fertigungskosten.

Ein dem Oberbegriff von Anspruch 1 zugrundeliegender, als Schweißkonstruktion ausgeführter gattungsgemäßer Rinnenschuß ist aus der DE 974 612 bekannt. Der einfache Aufbau dieses Rinnenschusses wird durch gewalzte U-Eisenprofile bestimmt, die mit ihren Flanschschenkeln einander zugewandt die Seitenwangen des Rinnenschusses bilden, und die über ein den Förderboden bildendes Blech, dessen Randabschnitte schräg nach oben abgewinkelt sind, miteinander verschweißt sind. Die Flanschschenkel können hierdurch zugleich die oberen bzw. unteren Führungsleisten für die Kratzerenden der Kratzer bilden und an den Außenseiten der vertikal aufragenden Zwischenschenkel können annähernd beliebig Anbauteile zur Führung von Gewinnungsmaschinen u.dgl. angebracht werden.

Aufgabe der Erfindung ist es, einen Rinnenschuß zu schaffen, der sämtliche Vorteile einer Schweißkonstruktion bietet, der einen vergleichsweise einfachen Aufbau hat, kostengünstig herstellbar ist und der auch für den Einsatz in modernen Hochleistungsförderern geeignet ist.

Diese und weitere Aufgaben werden mit der in den Ansprüchen angegebenen Erfindung gelöst. Erfindungsgemäß ist vorgesehen, daß die U-Eisenprofile mit ihren horizontalen Flanschschenkeln nach außen weisend, d.h. voneinander abgekehrt, miteinander verbunden sind, daß der Obertrum zwei separate, gewalzte, vorzugsweise L-förmige oder im wesentlichen T-förmige Seitenprofile aufweist, die mit ihren Vertikalschenkeln mit dem Förderboden verschweißt sind, und daß das die U-Eisenprofile verbindende Blech mittels Seitenführungen für den Untertrum bildenden Leisten gegenüber einem mit den unteren Flanschschenkeln verschweißten Bodenblech abgestützt ist.

Da das Verbindungsblech nach unten abgestützt ist, wird erreicht, daß die Kräfte und Belastungen aus dem Obertrum im wesentlichen parallel zum vertikal aufragenden Zwischenschenkel des U-Eisenprofils wirken und über die Untertrumleisten in das Bodenblech eingeleitet werden und von diesem abgestützt werden können. Außerdem wird durch die Kombination der vorgenannten Merkmale die Möglichkeit geschaffen, für die bevorzugte Ausgestaltung des erfindungsgemäßen Rinnenschusses den Obertrum als Wechseltrog auszubilden, der ausschließlich aus den Seitenprofilen und dem Förderboden besteht, während das Blech, welches die U-Eisenprofile miteinander verbindet, ein separates Bauteil ist und nicht vom Förderboden gebildet wird. Zwar führt dies zu einer geringfügigen Gewichtserhöhung des gesamten Rinnenschuß, diese kann jedoch durch die dünnwandigere Ausgestaltung der U-Eisenprofile zumindest teilweise ausgeglichen werden.

Vorzugsweise ist entsprechend das die U-Eisenprofile verbindende Blech ein Zwischenblech und der Obertrum ist ein Wechseltrog, bestehend aus zwei mit Verschleißverstärkung versehenen Seitenprofilen, die mit einem kräftigen, von einem Walzblech gebildeten Förderboden verschweißt sind. Der Abstand zwischen den Zwischenschenkeln der U-Eisenprofile richtet sich dann nach den Abmessungen des Wechseltroges. Weiter vorzugsweise stützen sich die Seitenprofile mit einem nach außen weisenden Schenkelfortsatz des Horizontalschenkels an dem jeweils oberen Flanschschenkel des U-Eisenprofils ab. Wenn sich die Seitenprofile des Wechseltrogs an den oberen Flanschschenkeln der U-Eisenprofile abstützen, wird erreicht, daß die Kräfte zumindest teilweise auch parallel in das die Seitenwangen bildende U-Eisenprofil eingeleitet werden, und mithin auch günstig in den Zwischenschenkel eingeleitet und von diesem aufgenommen werden können. Insbesondere bevorzugt wird, wenn als Arretiermittel für den Wechseltrog die Stirnflächen der Horizontalschenkel der Seitenprofile oder die Außenwände der Vertikalschenkel der L-förmigen Seitenprofile ohne Schenkelfortsatz jeweils mittels vorzugsweise einer einzigen durchgehenden Längsschweißnaht mit den Oberseiten der oberen Flanschschenkel des U-Eisenprofils verschweißt sind, wobei zur Demontage des Wechseltrogs die Schweißnähte vorzugsweise maschinell aufgetrennt, insbesondere ausgefräst werden. Durch das Verschweißen des Wechseltrogs mit den Flanschschenkeln entfallen separate Arretiermittel für die Wechseltröge, so daß eine ansonsten bei Wechseltrögen vorhandene Schwachstelle konstruktiv vermieden werden kann. Weiter vorzugsweise besteht das die U-Eisenprofile verbindende Blech aus zwei voneinander beabstandet angeordneten und zwischen sich eine Öffnung freilassenden Blechstreifen, um einerseits das Gesamtgewicht des Rinnenschusses weiter zu reduzieren, und andererseits mit der Öffnung zwischen den Blechstreifen eine Inspektionsöffnung zu erhalten, über die die Kratzerkette im Untertrum zugänglich ist.

In bevorzugter Ausgestaltung ragt einer der Blechstreifen an einem der Rinnenschußenden über beide U-Eisenprofile endseitig hinaus und der andere Blechstreifen ist am anderen Rinnenschußende gegenüber diesem zurückversetzt angeordnet. Bei montiertem Wechseltrog untergreifen dann die Blechstreifen die Stoßstelle an den Rändern des Förderbodens, so daß Feingut nicht in den Untertrum eintreten kann.

Die erste Ausführungsalternative eines erfindungsgemäßen Rinnenschuß ist durch ein einstückiges, unter den unteren Flanschschenkeln der U-Eisenprofile angeschweißtes und mit Randleisten über diese beidseitig hinausragendes, den Untertrumboden bildendes Bodenblech gekennzeichnet, an dem zwei im wesentlichen zweischenklige, außen rechtwinklige und innen mit gewölbter und an die Kratzerenden angepaßter Profilkontur versehene Untertrumleisten mit ihren Unterschenkeln angeschweißt sind. Über die kräftigen Unterschenkel und die ggf. dünnwandigeren Oberschenkel der Untertrumleisten können die Kräfte, die vom Obertrum über den Förderboden in das bzw. die Zwischenbleche eingeleitet werden, abgefangen werden und die Schweißnähte, mit der das Zwischenblech bzw. die Blechstreifen mit den Zwischenschenkeln der U-Eisenprofile verschweißt sind, werden entlastet. Die Wandstärke des Unterschenkels der Untertrumleisten kann hierzu wenigstens 30%, vorzugsweise etwa 50% größer sein als die Wandstärke des Oberschenkels der Untertrumleisten. Zur Reduzierung der Montageschritte ist vorzugsweise die Kopffläche jedes Oberschenkels und die Randkante jedes Blechstreifens des Zwischenblechs über eine einzige, gemeinsame Schweißnaht am Zwischenschenkel der U-Eisenprofile angeschweißt.

Eine alternative, erfindungsgemäße Ausführungsform eines Rinnenschusses kennzeichnet sich durch einen einstückig mit den Leisten ausgebildeten, umgebogene, vertikal aufragende und die Untertrumleisten bildende Randabschnitte aufweisenden Untertrumboden, wobei das Bodenblech vorzugsweise aus zwei Blechabschnitten besteht, die sich über die Rinnenschußlänge durchgehend erstrecken und jeweils mit einem der unteren Flanschschenkel der U-Eisenprofile verschweißt sind. Auch diese Maßnahme reduziert das Gesamtgewicht des Rinnenschusses weiter. Zur Versteifung und zusätzlichen Abstützung des Untertrumbodens können zwischen den Randabschnitten des Untertrumbodens und den Blechabschnitten Stützrippen eingeschweißt sein. Die äußeren Randleisten der Blechabschnitte bzw. des einstückigen Bodenblechs, die über die unteren Flanschschenkel der U-Eisenprofile hinausragen, können vorzugsweise nach unten abgewinkelt sein. Das U-Eisenprofil kann aus einem vorzugsweise dünnwandigen Formstahl mit gewichtsoptimierten Wandstärken und/oder aus einem Normprofil bestehen.

Die Ausgestaltung des Rinnenschusses mit nach außen gekehrten Flanschschenkeln bietet insbesondere auch Vorteile, wenn die Rinnenschußverbindungsmittel vorzugsweise geschmiedete Knebeltaschen umfassen, da diese dann zwischen den einander zugewandten Innenseiten der Flanschschenkel formschlüssig eingesetzt und eingeschweißt werden können, um einerseits die U-Eisenprofile weiter zu verstärken bzw. zu versteifen und hierdurch eine weitere Reduzierung von deren Wandstärke zu erlauben, und andererseits zumindest in der Höhe paßgenau und damit fertigungstechnisch vereinfacht an den Seitenwangen angesetzt werden zu können. Das Anschweißen der Knebeltaschen an den U-Eisenprofilen erfolgt vorzugsweise dergestalt, daß die Knebeltaschen an einem Rinnenschußende über die U-Eisenprofile hinausragen und am anderen Rinnenschußende zurückversetzt angeordnet sind, damit durch die Überlappung der Knebeltaschen am Rinnenschußstoß zwischen zwei benachbarten Rinnenschüssen ein Ermüdungsverschleiß oder Ausbrüche an den Stirnenden der U-Eisenprofile und/oder des Förderbodens vermieden werden. Die nach außen gekehrten Flanschschenkel der U-Eisenprofile bieten desweiteren den Vorteil, daß eine Anschlußkonsole für einen Schreitbalken zumindest mit ihrem Stirnbereich formschlüssig zwischen den einander zugewandten Innenseiten der Flanschschenkel der U-Eisenprofile eingesetzt und eingeschweißt werden kann. Ferner bietet die Konstruktion des erfindungsgemäßen Rinnenschuß die Möglichkeit, bei Verwendung des Rinnenschuß für einen Strebförderer zwischen der Randleiste des Blechabschnitts bzw. des den Untertrumboden bildenden Bodenblechs und dem oberen Flanschschenkel des U-Eisenprofils ein abgewinkeltes Leitblech als statische Laderampe anzuschweißen, mit der Haufwerk beim Rücken des Förderers in den Obertrum befördert werden kann.

Bei einer Ausgestaltung des erfindungsgemäßen Rinnenschuß mit Wechseltrog und mit einer Inspektionsöffnung zwischen den das Zwischenblech bildenden Blechstreifen wird insbesondere bevorzugt, wenn der Wechseltrog einiger Rinnenschüsse als Inspektionstrog ausgebildet ist und vorzugsweise aus drei identisch zueinander ausgeführten Trogabschnitten mit jeweils einem Förderbodenabschnitt und zwei im wesentlichen L-förmigen oder T-förmigen Seitenprofilabschnitten besteht, wobei bei beiden äußeren Trogabschnitten die Außenstirnkanten der Horizontalschenkel der Seitenprofilabschnitte oder die Außenwände der Seitenprofile mit der Oberseite der Deckschenkel über jeweils eine einzige durchgehende Längsschweißnaht verschweißt sind und der mittlere Trogabschnitt mittels lösbarer Trogbefestigungsmittel an den beiden anderen Trogabschnitten und/oder an den oberen Flanschschenkeln der U-Eisenprofile arretiert ist. Vorzugsweise sind dann die Förderbodenabschnitte aller Trogabschnitte trogendseitig mit vorzugsweise durch Brennschneiden hergestellten gewölbten Rändern versehen, wobei das Wölbungsprofil des einen Randes komplementär zum Wölbungsprofil des anderen Randes ausgebildet ist, um einen ruhigen Kratzerübergang zwischen den Trogabschnitten zu ermöglichen. Es versteht sich, daß vorzugsweise dann auch der Förderboden rinnenschußendseitig mit durch Brennschneiden hergestellten, bogenförmigen Rändern versehen ist und das Wölbungsprofil jeweils des einen Randes komplementär zum Wölbungsprofil des anderen Randes des Förderbodens ausgebildet ist.

Weitere Vorteile und Ausgestaltungen des erfindungsgemäßen Rinnenschuß ergeben sich aus der nachfolgenden Beschreibung zweier in der Zeichnung schematisch dargestellter Ausführungsbeispiele. In der Zeichnung zeigen:
- **Fig. 1**: perspektivisch einen erfindungsgemäßen Rinnenschuß gemäß einer ersten Ausführungsalternative;
- **Fig. 2**: einen Vertikalschnitt durch den Rinnenschuß gem. Fig. 1;
- **Fig. 3**: einen Vertikalschnitt durch einen Rinnenschuß gem. einer zweiten Ausführungsalternative;
- **Fig. 4**: perspektivisch einen aus drei identischen Trogabschnitten gebildeten Inspektionstrog; und
- **Fig. 5**: eine Draufsicht auf den Inspektionstrog.

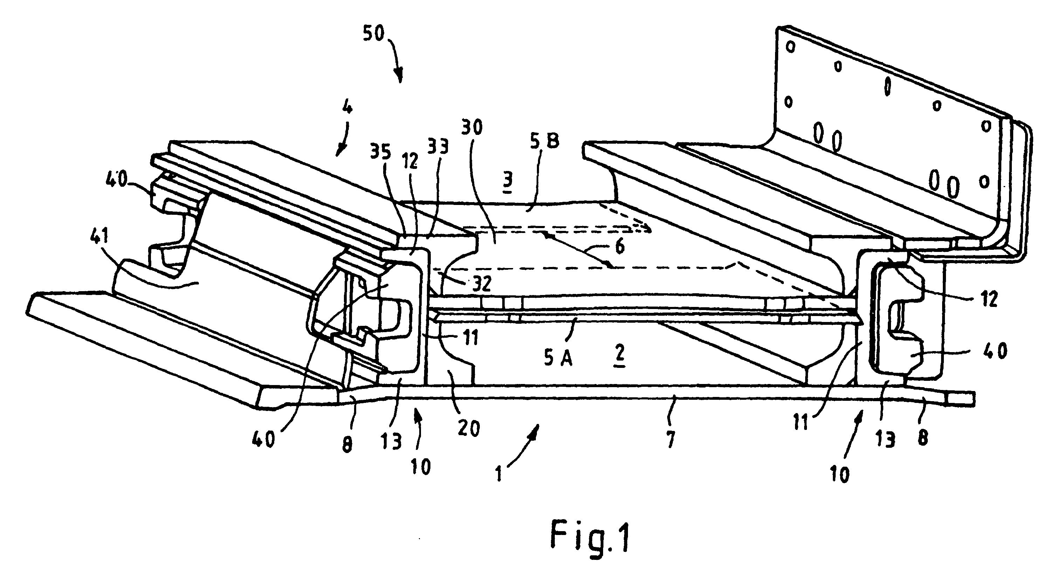

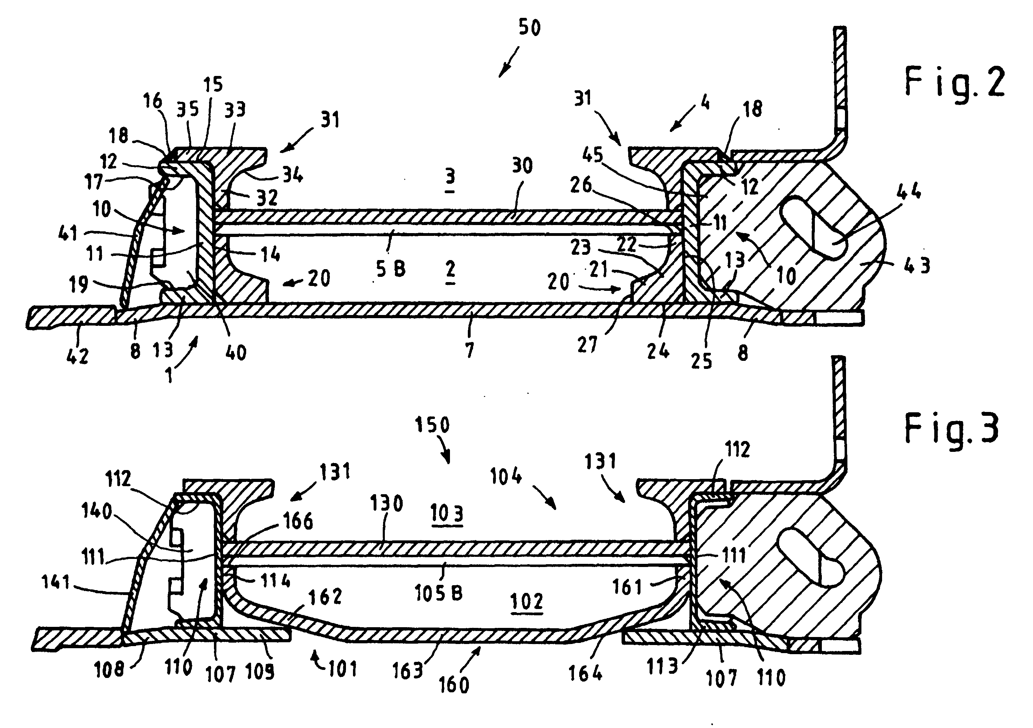

Der in den Fig. 1 und 2 insgesamt mit 50 bezeichnete Rinnenschuß ist in Ausgestaltung für einen Strebförderer dargestellt und umfaßt eine den Untertrum 2 aufweisende Rahmenkonstruktion 1 und einen den Obertrum 3 bildenden, auswechselbar ausgeführten und sich an der Rahmenkonstruktion 1 abstützenden Wechseltrog 4. Der in montiertem Zustand dargestellte Wechseltrog 4 ist von der Rahmenkonstruktion 1 vertikal abhebbar. Die Rahmenkonstruktion 1 des Rinnenschusses 50 hat als wesentliche Bauteile zwei die Seitenwangen des Rinnenschusses 50 bildende, gewalzte U-Eisenprofile, die jedes einen vertikal aufragenden Zwischenschenkel 11, einen oberen, nach außen weisenden Flanschschenkel 12 und einen unteren, nach außen weisenden Flanschschenkel 13 aufweisen. Die identisch zueinander ausgebildeten jedoch spiegelverkehrt zueinander, d.h. mit den Flanschschenkeln 12, 13 voneinander wegweisend angeordneten U-Eisenprofile 10 sind mittels zweier etwa auf halber Höhe an der Innenwand 14 des Zwischenschenkels 11 angeschweißter und in Fig. 1 schematisch gezeigter Blechstreifen 5A, 5B fest miteinander verbunden, wobei die Blechstreifen 5A, 5B voneinander beabstandet sind und innerhalb des Rinnenschusses 50 eine Öffnung 6 ausbilden, die bei abgenommenem Wechseltrog 4 als Inspektionsöffnung für die im Untertrum 2 umlaufende und mit den Kratzern bestückte, nicht dargestellte Kratzerkette dienen kann. Die Rahmenkonstruktion 1 beim Rinnenschuß 50 umfaßt desweiteren ein sich über die gesamte Rinnenschußbreite erstrekkendes Bodenblech 7, welches sich mit über die unteren Flanschleisten 13 der U-Eisenprofile 10 hinausragenden und leicht nach unten abgewinkelten Randleisten 8 auf dem Liegenden im untertägigen Streb abstützt. Die Blechstreifen 5A, 5B sind gegenüber dem Bodenblech 7 mittels zweier vorzugsweise gewalzter, zweischenkliger Untertrumleisten 20 abgestützt, die einen Unterschenkel 21 und einen Oberschenkel 22 umfassen, an der Innenfläche 23 mit einer an die Kratzerenden angepaßten Profilform versehen sind und an den Außenseiten 24, 25 rechtwinklig zueinander abgewinkelt stehen. Der Oberschenkel 22 verläuft parallel zum Zwischenschenkel 11 und seine Kopfseite 26 stützt die Zwischenbleche 5A, 5B an deren Randbereichen in Vertikalrichtung, mithin parallel zum Zwischenschenkel 11, ab. Die Oberschenkel 22 und die Randbereiche der Blechstreifen 5A, 5B können mittels einer einzigen, nicht dargestellten Schweißnaht mit den Innenseiten 14 der Zwischenschenkel 11 verschweißt sein. Weitere, nicht gezeigte Schweißnähte zur Versteifung der Rahmenkonstruktion 1 sind zwischen den unteren Flanschschenkeln 13 und den Randleisten 8 des Bodenblechs 7 sowie den Innenkanten 27 der Bodenschenkel 21 und dem Bodenblech 7 vorgesehen, wobei sich sämtliche Schweißnähte durchgehend über die Rinnenschußlänge erstrecken und aufgrund des Aufbaus und der Konstruktion des Rinnenschusses 50 mittels Schweißrobotern angebracht werden können.

Der den Obertrum 3 umfassende Wechseltrog 4 besteht ausschließlich aus einem Förderboden 30 sowie zwei als Walzprofile ausgeführten Seitenprofilen 31, die im gezeigten Ausführungsbeispiel einen annähernd T-förmigen Querschnitt mit einem Vertikalschenkel 32 und einem Horizontalschenkel 33 haben. Der Fuß des Vertikalschenkels 32 ist über Längsschweißnähte mit dem Förderboden 30 verschweißt. Zum Obertrum 3 hin verläuft die Innenfläche 34 des Vertikalschenkels 32 bzw. des Horizontalschenkels 33 mit einer Profilkontur, die an die Profilkontur der nicht gezeigten Kratzerenden angepaßt ist, so daß sich diese seitlich im Obertrum 3 führen. Die Seitenprofile 31 sind mit einer ausreichenden Wandstärke bemessen, um eine Verschleiß- bzw. Abnutzungsschicht von mehreren mm, z.B. 15 mm, an der Innenfläche 34 der Seitenprofile zu bilden. Der Horizontalschenkel 33 beider Seitenprofile 31 hat einen nach außen über den Vertikalschenkel 32 hinausragenden Schenkelfortsatz 35, mit welchem sich der Wechseltrog 4 auf der Deckseite 15 des oberen Flanschschenkels 12 abstützt. Die Außenstirnfläche 16 des Schenkelfortsatzes 35 der Horizontalabschnitte 33 beider Seitenprofile 31 ist über eine Längsschweißnaht 18 mit der Deckseite 15 des oberen Flanschschenkels 12 verschweißt, wobei zum Auswechseln des Wechseltrogs 4 beide Längsschweißnähte 18 maschinell aufgetrennt bzw. ausgefräst werden; ein neuer Wechseltrog 4 kann dann anschließend mittels neu anzubringender Längsschweißnähte wieder mit den oberen Flanschschenkeln 12 der U-Eisenprofile 10 verbunden werden.

Da die Flanschschenkel 12, 13 der U-Eisenprofile 10 nach außen gekehrt sind, wird ein von dem Zwischenschenkel 11 und den einander zugewandten Innenseiten 17, 19 der beiden Flanschschenkel 12, 13 begrenzter Aufnahmeraum gebildet, in welchem geschmiedete Knebeltaschen 40 als Teile der Rinnenschußverbindungsmittel formschlüssig eingesetzt und eingeschweißt werden können. Die den Aufnahmeraum zumindest an den Stoßenden der Rinnenschüsse 50 vollständig ausfüllenden Knebeltaschen 40 sorgen für eine zusätzliche Versteifung zwischen den beiden Flanschschenkeln 12, 13 des U-Eisenprofils 10 und mithin des U-Eisenprofils 10 selbst, so daß dessen Wanddicke und die des Zwischenschenkels 11 vergleichsweise niedrig gehalten werden kann und gewichtsoptimiert ausgelegt werden kann. Wie Fig. 1 erkennen läßt, ragen am vorderen Rinnenschußende die beiden jeweils Taschenaufnahmen für die Köpfe von nicht dargestellten Knebelbolzen aufweisenden Knebeltaschen 40 endseitig über die U-Eisenprofile 10 hinaus, während sie am in Fig. 1 hinteren Rinnenschußende zurückversetzt angeordnet sind. Auch der Blechstreifen 5A überragt die U-Eisenprofile 10 im wesentlichen um das gleiche Maß, während der Blechstreifen 5B zurückversetzt ist, so daß die Blechstreifen 5A, 5B den im wesentlichen bündig mit den U-Eisenprofilen 10 abschließenden Förderboden 30 zungenförmig unterlappen, um einen Durchtritt von Feinkohlestaub vom Fördertrum 3 in den Rücklauftrum 2 zu verhindern.

Im gezeigten Ausführungsbeispiel handelt es sich um einen Rinnenschuß 50 für einen Strebförderer. Die in den Fig. 1 und 2 linke Querseite des Rinnenschusses 50 ist daher mit einem Leitblech 41 als statische Laderampe versehen, die zwischen der Vorderkante der Randleisten 8 und der Unterseite des oberen Flanschschenkels 12 eingeschweißt ist. Vor dem Leitblech 41 ist eine Maschinenfahrbahn 42 z.B. für ein Walzenlader angeschweißt und an der gegenüberliegenden Querseite, die im untertägigen Streb die Versatzseite des Rinnenschuß 50 bildet, ist eine Anschlußkonsole 43 mit einer Anschlußöffnung 44 für einen Schreitbalken zum Rücken eines aus mehreren Rinnenschüssen 50 gebildeten Strebförderers angeschweißt. Der Frontbereich 45 der Anschlußkonsole 43 ist an den Freiraum im U-Eisenprofil 10 angepaßt und liegt formschlüssig zwischen den Innenseiten 17, 19 der beiden Flanschschenkel 12, 13.

Fig. 3 zeigt ein zweites Ausführungsbeispiel für einen Rinnenschuß 150, welcher ebenfalls aus U-Eisenprofilen 110 gebildete Seitenwangen mit Zwischenschenkel 111, unterem Flanschschenkel 113 und oberem Flanschschenkel 112 umfaßt, die jeweils nach außen gekehrt sind und einen Freiraum zur formschlüssigen Aufnahme der geschmiedeten Knebeltaschen 140 bilden. Die U-Eisenprofile 110 der den Untertrum 102 aufnehmenden Rahmenkonstruktion 101 sind auch hier mittels eines von zwei Blechstreifen gebildeten Zwischenblechs miteinander verbunden, von denen in Fig. 3 nur der Zwischenblechstreifen 105B zu erkennen ist. Die Seitenränder des Blechstreifens 105B sind etwa auf halber Höhe des Zwischenschenkels 111 an dessen Innenwand 114 angeschweißt und oberhalb des Blechstreifens 105B stützt sich ein den Obertrum 103 umfassender Wechseltrog 104 ab, dessen Aufbau dem Wechseltrog nach Fig. 1 und 2 entspricht und der wiederum Förderboden 130 und Seitenprofile 131 aufweist.

Im Unterschied zum Rinnenschuß 50 nach den Fig. 1 und 2 ist beim Rinnenschuß 150 kein durchgehendes Bodenblech vorhanden, sondern an den beiden unteren Flanschschenkeln 113 der U-Eisenprofile 110 sind identisch zueinander ausgebildete Blechabschnitte 107 angeschweißt, die beidseitig mit einer äußeren, nach unten abgewinkelten Randleiste 108 sowie einem ebenen inneren Blechfortsatz 109 über die unteren Flanschschenkel 113 der U-Eisenprofile 110 hinausragen. Der Untertrumboden für den Untertrum 102 besteht beim Rinnenschuß 150 aus einem einstückigen Blech 160 mit umgebogenen und vertikal nach oben ragenden Randabschnitten 161, wobei zwischen dem Zentralabschnitt 163 und den Randabschnitten 161 des Blechs 160 Mittenabschnitte 162 ausgebildet sind, deren Profil bzw. Abwinklung an die Profilform der Kratzer angepaßt ist. Die Mittenabschnitte 162, die winklig zwischen den Randabschnitten 161 und dem Zentralabschnitt 163 verlaufen, sind mit ihrer Unterseite 164 mit dem ebenen Blechfortsatz 109 der Blechstreifen 107 verschweißt, wobei zur zusätzlichen vertikalen Abstützung zwischen dem Blechfortsatz 109 und dem Zwischenabschnitt 162 nicht dargestellte Stützrippen eingeschweißt sein können. Die oberen Kopfenden 166 der Randabschnitte 161 können mit den Blechstreifen 105 und der Innenwand 114 des Zwischenschenkels 111 mittels einer gemeinsamen Schweißnaht verschweißt sein.

Das Ausführungsbeispiel des Rinnenschuß 150 verdeutlicht, daß das U-Eisenprofil auch aus einem dünnwandigen Norm- bzw. Standardprofil bestehen könnte, da sämtliche Kräfte in Vertikalrichtung annähernd parallel zum Zwischenschenkel 111 in das U-Eisenprofil 110 eingeleitet werden und der Obertrum 103, in welchem das gewonnene Gestein wie Kohle gefördert wird, zusätzlich über den seitlich an den Zwischenschenkel 111 angeschweißten Zwischenboden 105B und das den Untertrumboden bildende, abgewinkelte Blech 160 abgestützt wird. Das in Fig. 3 gezeigte dünnwandige U-Eisenprofil könnte insbesondere auch beim Rinnenschuß nach den Fig. 1 und 2 zum Einsatz kommen.

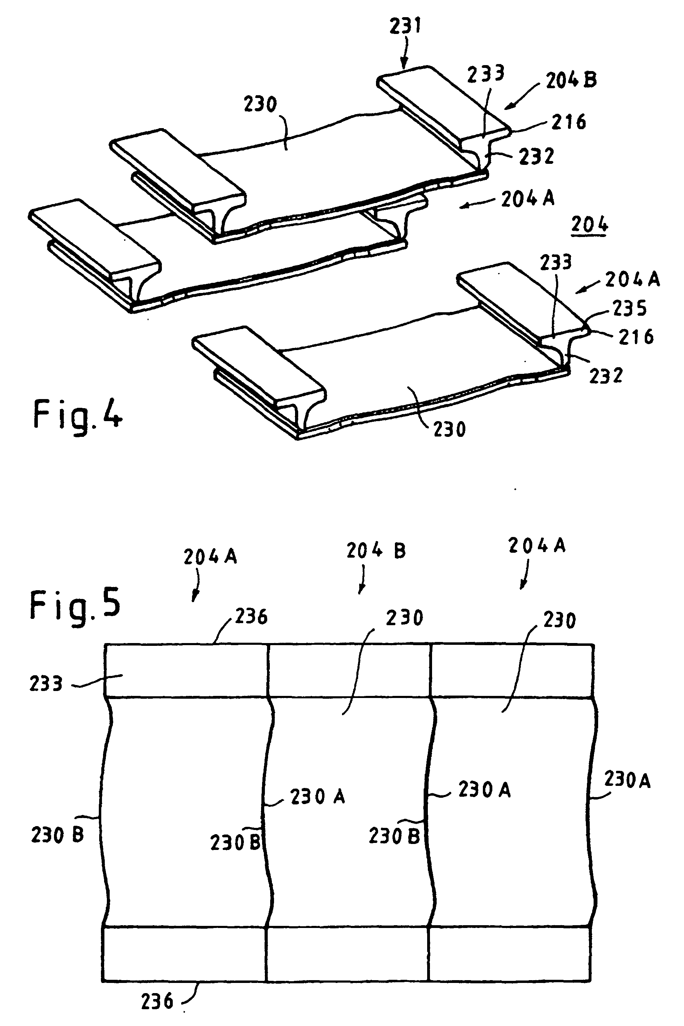

Die zwischen den Blechstreifen 5A, 5B bzw. 105B ausgebildete Inspektionsöffnung 6 bietet insbesondere Vorteile im Zusammenhang mit einem Inspektionstrog 204 als Wechseltrog, wie er in den Fig. 4 und 5 dargestellt ist. Der Inspektionstrog 204 besteht aus drei identisch zueinander ausgeführten Trogabschnitten 204A, 204B mit jeweils einem Förderbodenabschnitt 230 und zwei hier im wesentlichen T-förmigen Seitenprofilabschnitten 231 mit Vertikalschenkel 232 und Horizontalschenkel 233, wobei die Seitenprofilabschnitte 231 ein identisches Profil aufweisen wie die Seitenprofile 31, 131 der anderen Wechseltröge 4 bzw. 104. Beim Inspektionstrog 204 werden die Außenstirnflächen 216 der äußeren Schenkelfortsätze 235 der Horizontalschenkel 233 beider äußeren Trogabschnitte 204A über Längsschweißnähte mit der Oberseite (15, Fig. 12) der oberen Flanschschenkel (12, Fig. 2) der U-Eisenprofile 10 verschweißt, die sich über die Länge des jeweiligen Trogabschnitts 204A erstrecken. Der mittlere Trogabschnitt 204B hingegen wird mittels lösbarer, nicht gezeigter Trogbefestigungsmittel an den beiden anderen Trogabschnitten 204A und/oder an den die Seitenwangen bildenden U-Eisenprofilen 10 bzw. 110 arretiert, so daß er für eine Inspektion der Kratzerkette im Untertrum durch die Öffnung (6, Fig. 1) zwischen den Blechstreifen (5A, 5B) hindurch kurzfristig demontiert werden kann. Wie Fig. 5 gut entnommen werden kann, sind die Förderbodenabschnitte 230 aller Trogabschnitte 204A, 204B trogendseitig mit vorzugsweise durch Brennschneiden hergestellten gewölbten Rändern 230A, 230B versehen, wobei das Wölbungsprofil des einen Randes 230A komplementär zum Wölbungsprofil des anderen Randes 230B ausgebildet ist, so daß die im Obertrum umlaufenden Kratzer ruhig und ohne Sprungstelle die Stoßstellen zwischen den Trogabschnitten überlaufen können.

Für den Fachmann ergeben sich aus der vorhergehenden Beschreibung eine Reihe von Modifikationen, die in den Schutzbereich der anhängenden Ansprüche fallen sollen. Die Wanddicken der U-Eisenprofile bei den beiden Ausführungsbeispielen sind nur beispielhaft und das dünnwandige U-Eisenprofil könnte auch beim ersten Ausführungsbeispiel zur Anwendung kommen und umgekehrt. Die in den Ausführungsbeispielen T-förmig dargestellten Seitenprofile könnten auch L-förmig oder winkelförmig sein.

Bei L-förmigen oder winkelförmigen Seitenprofilen ohne Schenkelfortsatz können dann die Außenwände der Seitenprofile des Wechseltrogs mit den oberen Flanschschenkeln verschweißt werden. Die Horizontalschenkel der Seitenprofile können hierbei insbesondere bündig mit der Oberseite der oberen Flanschschenkel abschließen und die Schweißnaht als auftrennbares Arretiermittel für den Wechseltrog ist am Spalt zwischen U-Eisenprofil und Seitenprofil angebracht. Auch die Förderböden sämtlicher normalen Wechseltröge sind vorzugsweise an den Wechseltrogenden mit einem Wölbungsprofil entsprechend dem des Inspektionstroges versehen. Bei einem Einsatz des Rinnenschusses als Streckenförderer können die Anbauteile wie Leitblech, Anschlußkonsole, Maschinenführung u.dgl. entfallen.

## Patentansprüche

1. Rinnenschuß (50) für einen untertägigen Streb- oder Streckenförderer, mit Obertrum (3) und Untertrum (2) zur Führung der Kratzer einer Kratzerkette, mit einem diese trennenden Förderboden (30), mit Rinnenschußverbindungsmitteln und mit zwei Seitenwangen, die jeder ein gewalztes, einen Zwischenschenkel (11) und zwei Flanschschenkel (12, 13) aufweisendes U-Eisenprofil (10, 110) umfaßt und die durch wenigstens ein in etwa auf halber Höhe angeordnetes und am vertikal aufragenden Zwischenschenkel (11) der U-Eisenprofile angeschweißtes Blech (5A, 5B) miteinander verbunden sind, wobei die U-Eisenprofile (10; 110) mit ihren horizontalen Flanschschenkeln (12, 13; 112, 113) nach außen weisend miteinander verbunden sind, und der Obertrum (3; 103) zwei separate, gewalzte, vorzugsweise L-förmige oder T-förmige Seitenprofile (31; 131) aufweist, **dadurch gekennzeichnet, daß** die L-förmigen oder T-förmigen Seitenprofile mit ihrem Vertikalschenkel (32; 132) mit dem Förderboden (30; 130) verschweißt sind, und daß das die U-Eisenprofile verbindende Blech (5A, 5B; 105B) mittels Seitenführungen für den Untertrum (2; 102) bildenden Leisten (20; 161, 162) gegenüber einem mit den unteren Flanschschenkeln (13; 113) verschweißten Bodenblech (7; 107) abgestützt ist.

2. Rinnenschuß nach Anspruch 1, **dadurch gekennzeichnet, daß** das die U-Eisenprofile (10; 110) verbindende Blech (5A, 5B; 105B) ein Zwischenblech ist und der Obertrum (3; 103) ein Wechseltrog (4; 104) ist, der aus vorzugsweise mit Verschleißverstärkung versehenen Seitenprofilen (31; 131) und dem Förderboden (30; 130) besteht.

3. Rinnenschuß nach Anspruch 1 oder 2, **dadurch gekennzeichnet, daß** sich die Seitenprofile (31; 131) mit einem nach außen weisenden Schenkelfortsatz (35) des Horizontalschenkels (33) an dem jeweils oberen Flanschschenkel (12; 112) des U-Eisenprofils (10; 110) abstützen

4. Rinnenschuß nach einem der Ansprüche 1 bis 3, **dadurch gekennzeichnet, daß** die Außenstirnfläche (16) des Schenkelfortsatzes (35) jedes Horizontalschenkels (33) der Seitenprofile (31) oder die Außenwände der Seitenprofile jeweils mittels vorzugsweise einer einzigen durchgehenden Längsschweißnaht (18) mit den Oberseiten (15) der oberen Flanschschenkel (12) des U-Eisenprofils (10) verschweißt sind, wobei zur Demontage des Wechseltrogs (4) die Schweißnähte (18) vorzugsweise maschinell aufgetrennt, insbesondere ausgefräst werden.

5. Rinnenschuß nach einem der Ansprüche 1 bis 4, **dadurch gekennzeichnet, daß** das die U-Eisenprofile (10; 110) verbindende Blech aus zwei voneinander beabstandet angeordneten und zwischen sich eine Öffnung (6) freilassenden Blechstreifen (5A, 5B; 105B) besteht, wobei vorzugsweise der eine Blechstreifen (5A) an einem der Rinnenschußenden über beide U-Eisenprofile (10) endseitig hinausragt und der andere Blechstreifen (5B) am anderen Rinnenschußende gegenüber diesem zurückversetzt angeordnet ist.

6. Rinnenschuß nach einem der Ansprüche 1 bis 5, **gekennzeichnet durch** ein einstückiges, unter den unteren Flanschschenkeln (13) angeschweißtes und mit Randleisten (8) über diese beidseitig hinausragendes, den Untertrumboden bildendes Bodenblech (7), an dem zwei im wesentlichen zweischenklige, außen rechtwinklige und innen mit gewölbter und an die Kratzerenden angepaßter Profilkontur versehene Untertrumleisten (20) mit ihrem Unterschenkel (121) angeschweißt sind, wobei vorzugsweise die Wandstärke des Unterschenkels (21) der Untertrumleisten wenigstens 30%, vorzugsweise etwa 50% größer ist als die Wandstärke des Oberschenkels (22).

7. Rinnenschuß nach Anspruch 6, **dadurch gekennzeichnet, daß** die Kopffläche (26) jedes Oberschenkels (22) und die Randkante jedes Blechstreifens (5A, 5B) des Zwischenblechs über eine einzige, gemeinsame Schweißnaht am Zwischenschenkel (11) angeschweißt ist.

8. Rinnenschuß nach einem der Ansprüche 1 bis 5, **gekennzeichnet durch** einen einstückig mit den Leisten ausgebildeten, umgebogene, vertikal aufragende und die Untertrumleisten bildende Randabschnitte (161) aufweisenden Untertrumboden (160), wobei das Bodenblech vorzugsweise aus zwei sich über die Rinnenschußlänge durchgehend erstreckenden Blechabschnitten (107) besteht, die jeweils mit einem der unteren Flanschschenkel (113) der U-Eisenprofile (110) verschweißt sind.

9. Rinnenschuß nach Anspruch 8, **dadurch gekennzeichnet, daß** zwischen den Randabschnitten (161) des einstückigen Untertrumbodens und den Blechabschnitten (107) Stützrippen eingeschweißt sind.

10. Rinnenschuß nach einem der Ansprüche 6 bis 9, **dadurch gekennzeichnet, daß** die äußeren, über die unteren Flanschschenkel (13;113) hinausragenden Randleisten (8; 108) der Blechabschnitte (107) bzw. des Bodenblechs (7) nach unten abgewinkelt sind.

11. Rinnenschuß nach einem der Ansprüche 1 bis 10, **dadurch gekennzeichnet, daß** das U-Eisenprofil (110) aus einem vorzugsweise dünnwandigen Formstahl mit gewichtsoptimierter Wandstärke besteht.

12. Rinnenschuß nach einem der Ansprüche 1 bis 11, **dadurch gekennzeichnet, daß** die Rinnenschußverbindungsmittel vorzugsweise geschmiedete Knebeltaschen (40) umfassen, die zwischen den einander zugewandten Innenseiten (17; 19) der Flanschschenkel (12; 13) formschlüssig eingesetzt und eingeschweißt sind, wobei vorzugsweise die Knebeltaschen (40) an einem Rinnenschußende über die U-Eisenprofile (10) hinausragen und am anderen Rinnenschußende zurückversetzt an den U-Eisenprofilen (10) angeschweißt sind.

13. Rinnenschuß nach einem der Ansprüche 1 bis 12, **dadurch gekennzeichnet, daß** eine Anschlußkonsole (43) für einen Schreitbalken zumindest mit ihrem Frontbereich (45) formschlüssig zwischen den einander zugewandten Innenseiten (17, 19) der Flanschschenkel (12, 13) der U-Eisenprofile (10) eingesetzt und eingeschweißt ist.

14. Rinnenschuß nach einem der Ansprüche 1 bis 13, **dadurch gekennzeichnet, daß** bei einem Strebförderer zwischen der Randleiste (8; 108) des Bodenblechs (7) oder eines der Blechabschnitte (107) und dem oberen Flanschschenkel (12; 112) ein abgewinkeltes Leitblech (41; 141) als statische Laderampe angeschweißt ist.

15. Rinnenschuß nach einem der Ansprüche 1 bis 14, **dadurch gekennzeichnet, daß** der Wechseltrog (204) als Inspektionstrog ausgebildet ist und vorzugsweise aus drei identisch zueinander ausgeführten Trogabschnitten (204A, 204B) mit jeweils einem Förderbodenabschnitt (230) und zwei im wesentlichen L-förmigen oder T-förmigen Seitenprofilabschnitten (231) besteht, wobei die Außenstirnkanten (216) der Schenkelfortsätze (235) der Horizontalschenkel (233) der Seitenprofilabschnitte (231) oder die Außenwände der Seitenprofile der beiden äußeren Trogabschnitte (204A) mit der Oberseite (15) der oberen Flanschschenkel (12) über Längsschweißnähte verschweißt sind und der mittlere Trogabschnitt (204B) mittels lösbarer Trogbefestigungsmittel an den beiden anderen Trogabschnitten (304A) und/oder an den oberen Flanschschenkeln der U-Eisenprofile (10; 110) arretiert ist.

16. Rinnenschuß nach Anspruch 15, **dadurch gekennzeichnet, daß** die Förderbodenabschnitte (230) aller Trogabschnitte (204A, 204B) trogendseitig mit vorzugsweise durch Brennschneiden hergestellten gewölbten Rändern (230A, 230B) versehen sind, wobei das Wölbungsprofil des einen Randes (230A) komplementär zum Wölbungsprofil des anderen Randes (230B) ausgebildet ist.

17. Rinnenschuß nach einem der Ansprüche 1 bis 16, **dadurch gekennzeichnet, daß** die das Zwischenblech bildenden Blechstreifen (5A, 5B) und/oder der Förderboden (30, 130) rinnenschußendseitig mit durch Brennschneiden hergestellten, bogenförmigen Rändern versehen sind, wobei das Wölbungsprofil des einen Randes komplementär zum Wölbungsprofil des anderen Randes ausgebildet ist.

## Claims

1. A conveyor pan (50) for an underground face or gate conveyor with a top run (3) and a bottom run (2) for the guidance of the scraper of a scraper chain with a conveyor base (30) separating these, with means for linking the conveyor pans and with two side walls each comprising a rolled iron U-profile (10, 110) having an intermediate arm (11) and two flange arms (12, 13) and which are joined together by at least one welded on plate (5a, 5b) arranged at about half height and on the vertically extending intermediate arm (11) of the iron U-profiles, wherein the iron U-profiles (10; 110) are joined together with their horizontal flange arms (12, 13; 112, 113) facing outwards and the top run (3; 103) has two separate rolled side profiles (31; 131), preferably L-shaped or T-shaped, **characterised in that** the L-shaped or T-shaped side profiles are welded by their vertical arms (32; 132) to the conveyor base (30; 130), and that the plate (5A, 5B; 105B) joining the iron U-profiles is supported by means of rails (20; 161, 162) forming side guides for the bottom run (2; 102) against the base plate (7; 107) welded to the lower flange arms (13; 113).

2. A conveyor pan according to Claim 1, **characterised in that** the plate (5A, 5B; 105B) joining the iron U-profiles (10; 110) is an intermediate plate and the top run (3; 103) is an exchangeable tray (4; 104), which comprises preferably side profiles (31; 131) and conveyor base (30; 130) provided with wear reinforcement.

3. A conveyor pan according to Claim 1 or Claim 2, **characterised in that** the side profiles (31; 131) are supported by means of an outward facing arm extension (35) of the horizontal arm (33) on the upper flange arm (12; 112) in each case of the iron U-profiles (10; 110).

4. A conveyor pan according to one of the Claims 1 to 3, **characterised in that** the outer end surface (16) of the arm extension (35) of each horizontal arm (33) of the side profiles (31) or the outer walls of the side profiles in each case are welded preferably by means of a single continuous long weld seam (18) to the upper sides (15) of the upper flange arm (12) of the Iron U-profiles (10), whereby for the dismounting of the exchangeable tray (4) the welded seam (18) is separated, preferably by machine, especially milled out.

5. A conveyor pan according to one of the claims 1 to 4, **characterised in that** the plate joining the iron U-profiles (10; 110) comprises two plate strips (5A, 5B; 105B) arranged separated from each other leaving an opening (6) free between them, wherein preferably one of the plate strips (5A) extends out over one of the conveyor pan ends over both the ends of the iron U-profiles (10) and the other plate strip (5B) is arranged set back from the other conveyor pan end.

6. A conveyor pan according to one of the Claims 1 to 5, **characterised by** a single part base plate (7) welded on below the lower flange arms (13) and with edge rails (8) extending out on both sides beyond these, forming the bottom run base onto which two bottom run rails (20), essentially having two arms, right-angled on the outside and provided on the inside with a curved profile contour matched to the scraper ends are welded on by their lower arms (121), wherein preferably the wall thickness of the lower arm (21) of the bottom run rails is at least 30% preferably some 50% greater than the wall thickness of the upper arm (22).

7. A conveyor pan according to Claim 6, **characterised in that** the top surface (26) of each upper arm (22) and the surrounding edge of each metal strip (5A, 5B) of the intermediate plate are welded via a single common welded joint to the intermediate arm (11).

8. A conveyor pan according to one of the Claims 1 to 5, **characterised by** a bottom run base (160) formed in one part with the rails, bent and extending vertically and the edge sections (161) forming the bottom run rails, whereby the base plate preferably comprises two plate sections (107) extending continuously over the length of the conveyor pan, which are in each case welded to one of the lower flange arms (113) of the iron U-profile (110).

9. A conveyor pan according to Claim 8, **characterised in that** supporting ribs are welded in between the edge sections (161) of the single part bottom run base and the plate sections (107).

10. A conveyor pan according to one of the Claims 6 to 9, **characterised in that** the outer edge rails (8; 108) of the plate sections (107) or of the base plate (7), which extend out over the lower flange arms (13; 113) are angled downwards.

11. A conveyor pan according to one of the Claims 1 to 10, **characterised in that** the iron U-profile (110) comprises a preferably thin walled formed steel with weight optimising wall thickness.

12. A conveyor pan according to one of the claims 1 to 11, **characterised in that** the means connecting the conveyor pans preferably comprise forged toggle pockets (40) which are inserted with positive engagement between the mutually facing inner sides (17; 19) of the flange arms (12; 13) and are welded in, wherein preferably the toggle pockets (40) on one conveyor pan end extend out over the iron U-profile (10) and at the other end of the conveyor pan are welded in to the iron U-profiles (10).

13. A conveyor pan according to one of the claims 1 to 12, **characterised in that** a connecting bracket (43) for an advancing beam is inserted and welded in at least using its front region (45) between the mutually facing inner sides (17, 19) of the flange arms (12, 13) of the iron U-profile (10).

14. A conveyor pan according to one of the Claims 1 to 13, **characterised in that** for a face conveyor an angled guide plate (41; 141) is welded on as a static loading ramp between the edge rails (8; 108) of the base plate (7) or one of the plate sections (107) and the upper flange arm (12; 112).

15. A conveyor pan according to one of the claims 1 to 14, **characterised in that** the exchangeable tray (204) is formed as an inspection tray and preferably comprises three identical tray sections (204A, 204B) each with a conveyor base section (230) and two essentially L-shaped or T-shaped side profile sections (231), whereby the outer face edges (216) of the arm extensions (235) of the horizontal arms (233) of the side profile sections (231) or the outer walls of the side profiles of the two outer tray sections (204A) are welded with the upper side (15) of the upper flange arm (12) using a long welded seam and the centre tray section (204B) is retained by means of detachable tray fastening means to the two other tray sections (304A) and/or to the upper flange arms of the Iron U-profiles (10; 110).

16. A conveyor pan according to claim 15, **characterised in that** the conveyor base section (230) of all the tray sections (204A, 204B) are provided on the tray side with curved edges (230A, 230B) preferably produced by flame cutting, whereby the curved profile of the one edge (230A) is complimentary to the curved profile of the other edge (230B).

17. A conveyor pan according to one of the claims 1 to 17, **characterised in that** the metal strips (5A, 5B) forming the intermediate plate and/or the conveyor base (30, 130) are provided on the end sides of the conveyor pan with curved edges produced by flame cutting, whereby the curved profile of the one edge is formed complimentary to the curved profile of the other edge.

## Revendications

1. Chemin de convoyage (50) pour convoyeur sous-terrain blindé ou convoyeur de voie de base, comportant une goulotte supérieure (3) et une goulotte inférieure (2) de guidage des raclettes d'une chaîne à raclettes, un plateau de convoyage (30) séparant lesdites goulottes, des éléments de connexion des chemins de convoyage, ainsi que deux éléments latéraux comprenant chacun un profilé acier en U (10 ; 110) constitué d'une âme (11) et de deux semelles (12, 13), lesdits éléments latéraux étant reliés entre-eux par au moins une plaque métallique (5A, 5B) agencée environ à mi-hauteur et soudée auxdites âmes (11) desdits profilés qui s'élèvent verticalement, de telle sorte que lesdits profilés (10 ; 110) sont reliés ensemble par leurs semelles latérales (12, 13 ; 112, 113) disposées horizontalement en pointant vers l'extérieur et que la goulotte supérieure (3 ; 103) présente deux profilés laminés latéraux séparés (31 ; 131), en forme respectivement de L et de T, ledit chemin de convoyage étant **caractérisé en ce que** lesdits profilés latéraux en forme de L et de T sont soudés par leur paroi verticale (32 ; 132) au plateau de convoyage (30 ; 130) et que la plaque (5A, 5B ; 105B) reliant les profilés acier en U est supportée par rapport à la plaque de base (7 ; 107) soudée aux semelles inférieures (13 ; 113) au moyen de plaques (20 ; 161, 162) constituant des guides latéraux pour la goulotte inférieure (2 ; 102).

2. Chemin de convoyage selon la revendication 1, **caractérisé en ce que** la plaque (5A, 5B ; 105B) reliant les profilés acier en U (10 ; 110) est une plaque de séparation et que la goulotte supérieure (3 ; 103) est un tablier de ramassage (4 ; 104) constitué d'éléments latéraux (31 ; 131), préférablement munis de renforcements d'usure, et de la plaque de convoyage (30 ; 130).

3. Chemin de convoyage selon la revendication 1 ou 2, **caractérisé en ce que** les éléments latéraux (31 ; 131) sont supportés par une projection d'aile de profilé (35) pointant vers l'extérieur de la plaque horizontale (33) sur chaque semelle latérale supérieure (12 ; 112) des profilés acier en U (10, 110).

4. Chemin de convoyage selon une des revendications 1 à 3, **caractérisé en ce que** soit les faces frontales extérieures (16) de la projection d'aile de profilé (35) de chaque plaque horizontale (33) des éléments latéraux (31), soit les parois extérieures desdits éléments latéraux, sont toujours soudées à la face supérieure (15) de la semelle supérieure (12) du profilé acier en U (10), préférablement au moyen d'un seul cordon de soudure longitudinal continu (18), de telle sorte que lesdits cordons de soudure (18) sont éliminés par usinage, et de préférence par fraisage, pour le démontage du tablier de ramassage (4).

5. Chemin de convoyage selon une des revendications 1 à 4, **caractérisé en ce que** la plaque de liaison des profilés acier en U (10 ; 110) est constituée de deux plaques métalliques (5A, 5B ; 105B) indépendantes et disposées avec un espacement formant entre-elles une ouverture (6), de telle sorte qu'une plaque métallique (5A) à l'une des extrémités du chemin de convoyage ressort préférablement en bout des deux profilés acier en U (10) et que l'autre plaque métallique (5B) est disposée en retrait à l'autre extrémité du chemin de convoyage, à l'opposé de la première.

6. Chemin de convoyage selon une des revendications 1 à 5, **caractérisé par** une plaque de base (7) formant le fond de la goulotte inférieure et constituée d'une seule pièce, soudée sous les semelles latérales (13) inférieures et dont les bords (8) s'étendant de part et d'autre au-delà desdites semelles, à laquelle sont soudées par leurs semelles inférieures (121) deux pièces (20) de goulotte inférieure essentiellement constituées de deux parois, droites extérieurement mais courbées intérieurement et pourvues d'un contour de profil s'adaptant aux extrémités des raclettes, de telle sorte que la résistance de la paroi inférieure (21) de le pièce de goulotte inférieure est préférablement au moins 30% - préférablement encore environ 50% - supérieure à la résistance de sa paroi supérieure (22).

7. Chemin de convoyage selon la revendication 6, **caractérisé en ce que** la surface supérieure (26) de chaque paroi supérieure (22) et le bord de chaque plaque métallique (5A, 5B) du panneau de séparation sont soudés au moyen d'un cordon de soudure unique et commun à l'âme (11).

8. Chemin de convoyage selon l'une des revendications 1 à 5, **caractérisé par** un fond de goulotte inférieure (160) constitué d'une seule pièce avec l'éclisse, recourbé, se relevant verticalement et comportant des sections latérales (161) constituant l'éclisse de goulotte inférieure, de telle sorte que la plaque de base est constituée préférablement de deux portions de plaque (107) s'étendant sans interruption sur la longueur du chemin de convoyage et soudées chacune à une des semelles inférieures (113) du profilé acier en U (110).

9. Chemin de convoyage selon la revendication 8, **caractérisé en ce que** des nervures de support sont soudées entre les sections latérales (161) du fond de goulotte inférieure constitué d'une seule pièce et lesdites portions de plaque (107).

10. Chemin de convoyage selon une des revendications 6 à 9, **caractérisé en ce que** les bords extérieurs (8 ; 108) des portions de plaque (107), respectivement de la plaque de base (7), s'étendent au-delà des semelles inférieures (13 ; 113) et sont recourbés vers le bas.

11. Chemin de convoyage selon une des revendications 1 à 10, **caractérisé en ce que** le profilé acier en U (110) est constitué préférablement d'une tôle en acier peu épaisse et présentant un rapport poids/résistance optimisé.

12. Chemin de convoyage selon une des revendications 1 à 11, **caractérisé en ce que** les éléments de connexion des chemins de convoyage comportent préférablement des logements de rotules (40) forgés, rapportés sans espacement et soudés entre les parties intérieures en vis-à-vis (17 ; 19) des semelles (12 ;13), de telle sorte que les logements de rotules (40) sont préférablement soudés à l'un des chemins de convoyage en s'étendant au-delà du profilé acier en U (10) et à l'autre chemin de convoyage en retrait dudit profilé.

13. Chemin de convoyage selon une des revendications 1 à 12, **caractérisé en ce qu'**un tasseau (43) pour la fixation d'une poutrelle de support est rapporté et soudé sans espacement au moins en sa partie frontale (45) entre les parties intérieures en vis-à-vis (17, 19) des semelles (12, 13) du profilé acier en U (10).

14. Chemin de convoyage selon une des revendications 1 à 13, **caractérisé en ce que**, pour un convoyeur blindé, une plaque de guidage cintrée (41 ; 141) faisant office de rampe de chargement statique est soudée entre le bord (8 ; 108) de la plaque de base (7), ou entre une des portions de plaque (107), et la semelle supérieure (12 ; 112).

15. Chemin de convoyage selon une des revendications 1 à 14, **caractérisé en ce que** le tablier de ramassage (204) est construit comme un tablier d'inspection et consiste préférablement en trois sections de tablier (204A, 204B) de construction identique, comportant chacune une section de convoyage (230) et deux sections de profilés latéraux (231) essentiellement en L ou en T, de telle sorte que les bords externes (216) des projections (235) des semelles horizontales (233) des sections de profilés latéraux (231) ou les parois extérieures des profilés latéraux des deux tabliers de ramassage extérieurs (204A) sont soudés par un cordon longitudinal à la face supérieure (15) de la semelle de profilé supérieure (12) et que la section de tablier de ramassage intermédiaire (204B) est montée au moyen des fixations de tablier démontables aux deux sections de tablier extérieures (204B) et/ou à la semelle supérieure du profilé acier en U (10 ; 110).

16. Chemin de convoyage selon la revendication 15, **caractérisé en ce que** les plateaux de ramassage (230) de toutes les sections de tablier de ramassage (204A, 204B) comportent des bords courbés (230A, 230B) au tablier, lesdits bords étant préférablement produits par découpe au chalumeau, de telle sorte que le profil de courbure d'un bord (230A) est complémentaire au profil de courbure du bord adjacent (230B).

17. Chemin de convoyage selon une des revendications 1 à 16, **caractérisé en ce que** les plaques métalliques (5A, 5B) composant le panneau métallique de séparation et/ou le plateau de convoyage (30, 130) comportent, du côté du chemin de convoyage, des bords courbés produits par découpe au chalumeau, de telle sorte que le profil de courbure d'un bord est complémentaire au profil de courbure du bord adjacent.
